# EUROPÄISCHE PATENTSCHRIFT

(11) **EP 2 071 455 B1**
(45) Veröffentlichungstag und Bekanntmachung des Hinweises auf die Patenterteilung: **22.05.2019**
(21) Anmeldenummer: 08019615.7
(22) Anmeldetag: 10.11.2008
(51) Int. Cl.: G06F 9/30, G06F 9/455

(54) **Datenträger und Verfahren zum Betreiben eines Mikroprozessors eines Datenträgers**
Data medium and method for operating a data medium's microprocessor
Support de données et procédé de fonctionnement d'un microprocesseur d'un support de données

(30) Priorität: 09.11.2007 DE 102007053474
(43) Veröffentlichungstag der Anmeldung: 17.06.2009
(73) Patentinhaber: Giesecke+Devrient Mobile Security GmbH, 81677 München (DE)
(72) Erfinder: Kramposthuber, Georg, 80807 München (DE)

(56) Entgegenhaltungen:
- US-A1- 2004 015 678

## Beschreibung

Die Erfindung betrifft einen Datenträger, insbesondere einen tragbaren Datenträger, mit einem Mikroprozessor, der in einer Mehrzahl an Ausführungsmodi betreibbar ist, wobei jedem der Ausführungsmodi eine bestimmte Zahl an Registern zugeordnet ist. Die Erfindung betrifft ferner ein Verfahren zum Betreiben des Mikroprozessors des Datenträgers.

Ein Mikroprozessor der oben bezeichneten Art ist beispielsweise in ARM (Acorn Risc Machine)-Architektur bekannt. Ein ARM-Mikroprozessor ist in RISC (Reduced Instruction Set Computing)-Architektur realisiert und zeichnet sich durch einen effizienten Befehlssatz aus. Ein solcher Mikroprozessor verfügt über eine Anzahl an Registern, von denen eine Teil-Anzahl für ein aktuell ausgeführtes Programm versteckt und nur erreichbar ist, wenn sich der Mikroprozessor in einem bestimmten Ausführungsmodus bzw. Betriebsmodus befindet.

Ferner besteht bei Datenträgern, unter denen in der vorliegenden Beschreibung insbesondere Chipkarten oder SIM (Subscriber Identity Module)-Karten verstanden werden sollen, der Wunsch, Java Code-Implementierungen vorzusehen. Hierbei besteht das Problem, daß Java Code-Interpretationen durch den Mikroprozessor häufig eine geringe Performance aufweisen im Vergleich zur Implementierung vergleichbarer Funktionalität eines Codes, der z.B. in der Programmiersprache C vorliegt. Ferner besteht bei Java Code-Implementierungen der Nachteil einer geringen Flexibilität, insbesondere bei der Integration in komplexe Ausführungsumgebungen, bei der mehrere Applikationen und/oder mehrere physikalische Schnittstellen simultan verarbeitet werden.

Aus der US 2006/0218550 A1 ist, insbesondere im Hinblick auf Einchip-Controller, der Vorschlag bekannt, auf einer gemeinsamen Hardwarebasis zum einen allgemeinen Multifunktionsprozessor mit einem üblichen Echtzeitbetriebssystem und zum anderen einen oder mehrere virtuelle Maschinen für besonders zeitkritische Spezialaufgaben einzurichten. Die virtuellen Maschinen sind praktisch nur über einen Hardware Abstraction Layer mit der gemeinsamen Hardwarebasis verbunden und arbeiten isoliert von dem allgemeinen Multifunktionsprozessor, der insbesondere eine ARM-Architektur besitzen kann. Den virtuellen Maschinen sind in der gemeinsamen Hardwarebasis jeweils ein eigener Registersatz sowie ein Interruptgenerator zugeordnet. Die Konstruktion ermöglicht es, besonders schnell auf eine virtuelle Maschine umzuschalten und die zugeordnete Aufgabe auszuführen. Für Konstellationen, in denen eine virtuelle Maschine nach Art einer Applikation auf das Betriebssystem des Multifunktionsprozessors aufsetzt, eignet sich die bekannte Lösung jedoch nicht.

Aus der US 2004/0123288 A1 ist der Vorschlag bekannt, zur Steuerung der Übergänge zwischen einer oder mehreren virtuellen Maschine und einem die virtuellen Maschinen koordinierenden Monitor ein System einzusetzen, das bei Auftreten eines Übergangs Informationen zum Zustand der jeweils beteiligten Maschinen bestimmt und verwaltet. Die Informationen können auch Register betreffen.

Aus der US 2004/015678 ist eine Mikroprozessorarchitektur bekannt, die es erlaubt, Java-Byte-Code direkt in Hardware auszuführen. Um dies zu ermöglichen werden auf dem Mikroprozessor zwei getrennte CPUs realisiert, eine Java Control Unit und eine RISC Control Unit. Die beiden CPUs verwenden einen gemeinsamen Registersatz, über den sie kommunizieren. Registereinträge erhalten dabei eine unterschiedliche Bedeutung je nachdem, welche der beiden CPUs auf das Register zugreift. Beim Wechsel zwischen Java Control Unit und RISC Control Unit wird jeweils die andere CPU aktiviert, während die genutzten Register dieselben bleiben. Die Lösung ist effektiv, erfordert aber die hardwaretechnische Bereitstellung einer zusätzlichen CPU, was einen erhöhten Platzbedarf und einen erhöhten Stromverbrauch nach sich zieht. Die Lösung ist für ressourcenbeschränkte tragbare Datenträger wie Chip- oder SIM-Karten deshalb nicht geeignet.

Es ist Aufgabe der vorliegenden Erfindung, einen Datenträger sowie ein Verfahren zum Betreiben eines Mikroprozessors des Datenträgers anzugeben, welcher die Implementierung eines Interpreters für eine virtuelle Maschine mit hoher Performance erlauben.

Diese Aufgabe wird durch einen Datenträger mit den Merkmalen des Patentanspruches 1 und durch das Verfahren mit den Merkmalen des Patentanspruches 8 gelöst. Vorteilhafte Ausführungsformen sind jeweils in den abhängigen Patentansprüchen wiedergegeben.

Erfindungsgemäß ist bei einem gattungsgemäßen Datenträger vorgesehen, daß einer der Ausführungsmoden des Mikroprozessors eine virtuelle Maschine ist. In anderen Worten wird ein Betriebsmodus des Mikrocontrollers, dem eine bestimmte Zahl an Registern zugeordnet ist, als virtuelle Maschine-Modus vorgesehen. Hierdurch ergibt sich eine erhebliche Beschleunigung der Arbeitsgeschwindigkeit der virtuellen Maschine. Dies resultiert daraus, daß sich der Mikroprozessor, der sich in dem virtuelle Maschine-Ausführungsmodus befindet und hierbei mit einer Bytecode-Interpretation beschäftigt ist, alle hierzu relevanten Daten in den zugeordneten, dedizierten Registern abspeichern kann. Die Performance des Mikroprozessors kann damit insbesondere auch in Multitasking-Umgebungen verbessert werden. Die Erfindung hat damit insgesamt den Vorteil, daß mit nur geringem Aufwand hinsichtlich Änderungen an Hard- und Software eine auf einem Mikroprozessor mit mehreren Ausführungsmoden eingerichtete virtuelle Maschine erheblich beschleunigt werden kann.

Gemäß einer zweckmäßigen Ausgestaltung ist dem einen Ausführungsmodus, dem "virtuelle Maschine"-Modus, eine Anzahl an Registern beigeordnet, in welche von der virtuellen Maschine genutzte Variable einspeicherbar sind, so daß Operationen des Mikroprozessors ausführbar sind, ohne daß die Variablen von einem Speicher in den Mikroprozessor, und umgekehrt, geladen werden müssen. In die dem einen Ausführungsmodus beigeordneten Register sind in einer Ausführungsvariante Kontrollvariablen einspeicherbar, welche von der virtuellen Maschine mehrfach oder regelmäßig benötigt werden. Solche Variablen können beispielsweise ein virtueller Programm Counter VPC, ein virtueller Stack Pointer VSP, ein Top of Stack TOS, ein Frame Pointer FP und dergleichen sein. Üblicherweise sind diese Variablen als globale Variablen ausgelegt, welche vor jedem Zugriff erst von einem Speicher des Datenträgers in den Mikrocontroller und bei einem Update zurück in den Speicher geladen werden müssen. Die Erfindung ermöglicht es, diese Variablen direkt in die dem einen Ausführungsmodus zugeordneten, dedizierten Register abzulegen, so daß sie für einen Interpreter jederzeit schnell erreichbar sind, ohne daß hierbei Probleme mit eventuell zwischenzeitlich ablaufenden Programmen einer anderen Programmiersprache, z.B. C, entstehen. Die Erfindung ermöglicht damit vorteilhafterweise einen schnellen Zugriff auf einen Statusblock der virtuellen Maschine.

Die Erfindung hat den Vorteil, daß sie auch auf bereits vorhandenen Mikrokontrollern ausführbar ist, auch wenn diese von Hause aus über keinen speziellen Ausführungsmodus für eine virtuelle Maschine verfügen.In vorteilhafter Weise wird in einem solchen Fall einfach ein bestehender Ausführungsmodus des Mikroprozessors ersetzt und in den einen Ausführungsmodus, d.h. den "virtuelle Maschine"-Modus, umdefiniert. Hierzu bietet sich beispielsweise bei einem Mikroprozessor in ARM-Architektur, nach der der Mikroprozessor des erfindungsgemäßen Datenträgers bevorzugt ausgebildet ist, der sogenannte Fast Interrupt Request (FIQ)-Modus an, der neben einem dedizierten Stack Pointer, einem Linkregister und einem Safe Prozessor Status Register über fünf zusätzliche allgemeine, sog. General Purpose-Register verfügt. Hierdurch stehen für den "virtuelle Maschine"-Modus bis zu acht Register dediziert zur Verfügung, deren Inhalt bei einem Ausführungsmodus-Wechsel erhalten bleibt. Ein solcher Ausführungsmodus-Wechsel kann beispielsweise zum Ausführen von nativen Code oder initiiert durch eine Software-Unterbrechungsanforderung einer Multitaskingumgebung hervorgerufen sein.

In einer weiteren zweckmäßigen Ausgestaltung des Datenträgers sind Statusinformationen des Mikroprozessors mit einem einzigen Blocktransferbefehl speicherbar. Die Statusinformation ergibt sich aus den in den zugeordneten Registern des einen Ausführungsmodus enthaltenen Variablen, welche z.B. die oben genannten Variablen TOS, VPC, VSP oder FP sein können.

Das erfindungsgemäße Verfahren zum Betreiben eines Mikroprozessors eines Datenträgers, bei dem der Mikroprozessor selektiv in einem von mehreren Ausführungsmodi betrieben wird, wobei jedem der Ausführungsmodi eine bestimmte Zahl an Registern zugeordnet wird, zeichnet sich dadurch aus, daß als einer der Ausführungsmodi eine virtuelle Maschine bereitgestellt wird. Hiermit sind die gleichen Vorteile verbunden, wie sie in Verbindung mit dem erfindungsgemäßen Datenträger erläutert wurden.

Die Erfindung wird nachfolgend näher anhand von Ausführungsbeispielen in den Figuren beschrieben. Es zeigen:
- Fig. 1: die in einem gemäß ARMv4-Architektur ausgebildeten Mikroprozessor vorhandenen Register für verschiedene Ausführungsmodi,
- Fig. 2: eine beispielhafte Abbildung eines Statusblocks einer virtuellen Maschine,
- Fig. 3: ein Ausführungsbeispiel einer Java Stack-Operation, und

- Fig. 4: ein Ausführungsbeispiel für einen effizienten Aufbau einer Stack Frames nach einem Methodenaufruf unter Ausnutzung eines Blocktransferbefehls.

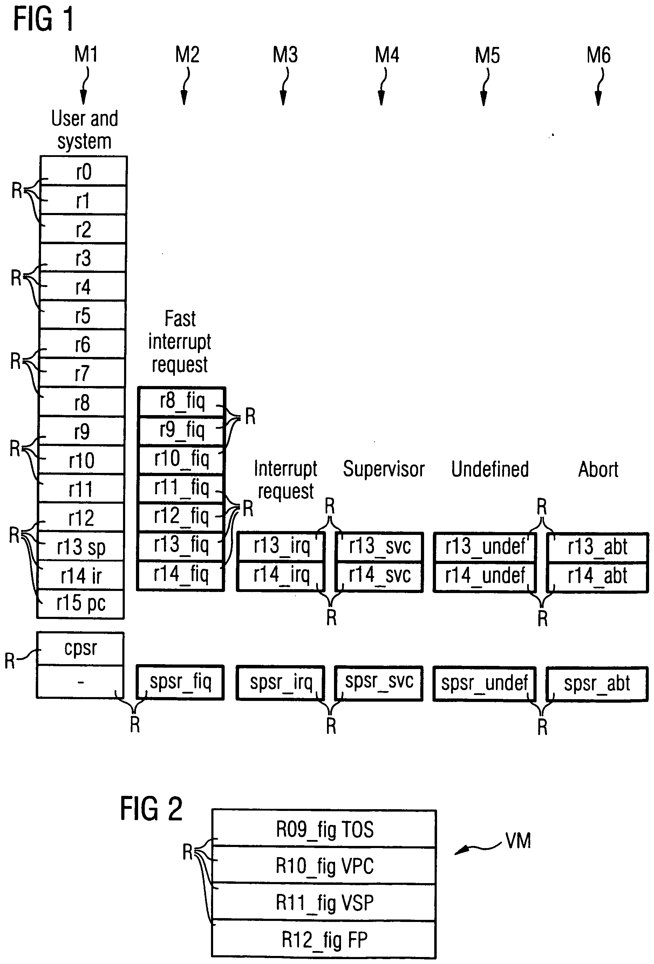

Bei einem erfindungsgemäßen Datenträger mit einem Mikroprozessor mit ARM- bzw. Risc-Architektur besitzt der Mikroprozessor mehrere Ausführungsmodi, denen jeweils eine bestimmte Zahl von Registern zugeordnet ist. Fig. 1 zeigt an einem Beispiel eines Mikroprozessors mit ARMv4-Architektur für eine Java virtuelle Maschine die dort vorhandenen 37 Register R mit jeweils 32 Bit Länge. Ein solcher Mikroprozessor ist für Chipkarten z.B. in einer ARM SC100-Konfiguration verfügbar. Die Register R sind im Ausführungsbeispiel sechs Ausführungsmodi M1, M2, M3, M4, M5 und M6 zugeordnet.

Dem Ausführungsmodus M1, der als User Mode ("User and System") bezeichnet wird, sind 15 allgemeine, sog. General Purpose-Register R zugeordnet, welche mit r0 bis r14 gekennzeichnet sind. Im Register r13 wird standardmäßig der Stack Pointer sp vorgehalten. Register r14 wird als Linkregister lr benutzt, in welchem eine Rücksprungadresse bei Prozeduraufrufen gespeichert wird, um in einen Programmzähler geschrieben zu werden. Ein weiteres Register r15 fungiert als Programmzähler (Programm Counter pc). Zusätzlich zu diesen direkt veränderbaren Registern gibt es noch ein StatusRegister (current program status register cpsr), das Statusbits und andere Informationen, wie z.B. einen momentanen Ausführungsmodus enthält. Ferner ist ein weiteres Register vorgesehen, das in der Figur mit "-" gekennzeichnet ist. Insgesamt stehen in dem Ausführungsmodus M117 Register zur Verfügung.

Die Ausführungsmodi M2 bis M6, die über bestimmte Ereignisse betreten und teilweise einem ausgeführten Code des Mikroprozessors zusätzliche Privilegien einräumen, sind:
- Ausführungsmodus M2: ein Fast Interrupt Request (FIQ),
- Ausführungsmodus M3: ein Interrupt Request (IRQ),
- Ausführungsmodus M4: ein Supervisor Mode (SVC),
- Ausführungsmodus M5: ein Undefined Mode (UNDEF) und
- Ausführungsmodus M6: ein Abort Mode (ABT).

Der Fast Interrupt Request-Modus (Ausführungsmodus M2) verfügt neben Registern R für einen dedizierten Stack Pointer (r13_fig), ein Linkregister (r14_fig) und ein Safe Prozessor Status Register (spsr_fig) über fünf zusätzliche allgemeine, General Purpose-Register r8_fig bis r12_fig. Dieser Ausführungsmodus M2 ist für die schnelle Abarbeitung von Hardware- oder Software-Unterbrechungen vorgesehen. Er wird jedoch aufgrund von Nebenbedingungen in Implementierungen einer ARM SC100-Konfiguration für Datenträger nicht verwendet.

Die Zuordnung von Registern der weiteren Ausführungsmodi M3 bis M6 ist einem Fachmann geläufig, so daß an dieser Stelle auf eine weitere detaillierte Beschreibung verzichtet wird.

Bei einem erfindungsgemäßen Datenträger mit einem Mikroprozessor der oben beschriebenen Architektur wird der Ausführungsmodus M2, der Fast Interrupt Request-Modus, stattdessen als "virtuelle Maschine"-Modus verwendet. Prinzipiell könnte auch einer der anderen Ausführungsmodi M3 bis M6 umdefiniert werden. Es bietet sich jedoch insbesondere der Ausführungsmodus M2 an, da dieser über fünf allgemeine und drei spezielle Register R verfügt. Infolgedessen stehen für die virtuelle Maschine bis zu acht Register R zur Verfügung, deren Inhalt bei einem Wechsel des Ausführungsmodus erhalten bleibt. Grundsätzlich könnte zur Realisierung der Erfindung auch ein Mikroprozessor bereitgestellt werden, der von Haus aus über einen virtuelle Maschine-Modus mit dedizierten Registern verfügt.

Ein erfindungsgemäßer Datenträger, dessen Mikroprozessor einen virtuelle Maschine-Modus aufweist, hat eine Reihe von Vorteilen.

Eine virtuelle Maschine besitzt einen Satz von Kontrollvariablen, die permanent benötigt werden. Solche Kontrollvariablen sind ein virtueller Programm Counter VPC, ein virtueller Stack Pointer VSP, ein Top of Stack TOS sowie ein Frame Pointer FP. Daneben können weitere Kontrollvariablen vorgesehen sein. Um zu vermeiden, daß diese Kontrollvariablen vor jedem Zugriff von einem Speicher des Datenträgers in den Mikrocontroller und bei einem Update zurück in den Speicher geladen werden müssen, werden diese direkt in die für den virtuelle Maschine-Modus vorgesehenen Register R gespeichert. Hierdurch sind sie für einen Interpreter jederzeit schnell verfügbar, ohne daß Probleme mit zwischenzeitlich ablaufenden Programmen entstehen. Dies ist exemplarisch in Fig. 2 dargestellt, welches einen virtuelle Maschine-Statusblock zeigt. Hierbei ist die Kontrollvariable TOS in dem Register r09_fig, die Kontrollvariable VPC in dem Register r10_fig, die Kontrollvariable VSP in dem Register r11_fig und die Kontrollvariable FP in dem Register r12_fig gespeichert. Im Ergebnis wird ein schneller Zugriff auf den Statusblock der virtuellen Maschine VM ermöglicht.

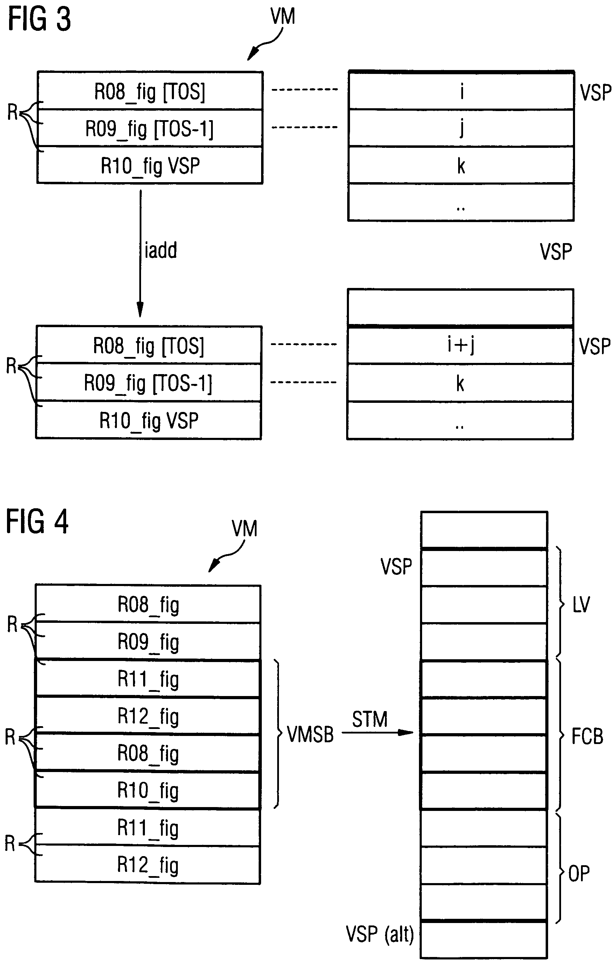

Das Vorsehen eines virtuelle Maschine-Modus in dem Mikroprozessor des erfindungsgemäßen Datenträgers ermöglicht weiter eine Beschleunigung von Operationen auf einen Stack der virtuellen Maschine. Dies wird nachfolgend anhand von Fig. 3 erläutert. Eine bekannte Möglichkeit zur Optimierung einer Java-Interpreter Loop ist das Vorhalten des Inhalts der Variablen TOS und gegebenenfalls der Variablen TOS-1 eines Stacks, dessen Adressen von einer niedrigen zu einer hohen Adresse hin wachsen. Falls der Stack von einer höheren zu einer niedrigeren Adresse hin wächst, kann statt TOS-1 auch die Variable TOS+1 vorgehalten werden. Werden diese Variablen direkt auf einen Teil der dedizierten Register des virtuelle Maschine-Modus gelegt, so hat das Ausführen von Operationen auf den (Java) Stack zur Folge, daß in vielen Fällen nur elementare Registeroperationen, die besonders effizient ausgeführt werden können, ausgeführt werden müssen, da zumindest ein Operand immer schon in dem dedizierten Register verfügbar ist.

Die obere Hälfte der Fig. 3 zeigt drei Register R des Ausführungsmodus der virtuellen Maschine VM sowie den Stack vor einer Addition zweier Integer-Variablen in den Registern. Die untere Hälfte der Fig. 3 zeigt die jeweiligen Register und den Stack nach der Operation. In dem Register r08_fig ist die Kontrollvariable TOS, in dem Register r09_fig ist die Kontrollvariable TOS-1 und in dem Register r10_fig die Kontrollvariable VSP enthalten. In dem Stack vor der Operation sind die Variablen i, j und k enthalten, wobei der virtuelle Stack Pointer VSP auf die Variable i zeigt. Hierdurch ergibt sich die in Fig. 3 gezeigte Zuordnung zwischen den Registern r08_fig[TOS] und r09_fig[TOS-1] zu den Variablen i und j. Die Addition der zwei Integer-Variablen i und j wird in den Registern R der virtuellen Maschine durchgeführt. Das Zurückschreiben der Addition (angedeutet durch "iadd" zwischen der oberen und unteren Hälfte der Register R) in den Stack kann so lange hinausgezögert werden, bis die Register R neu belegt werden müssen.

Ein weiterer Vorteil der Erfindung besteht in der Möglichkeit der Beschleunigung des Auf- und Abbaus eines Stack Frames, insbesondere beim Aufruf und der Rückkehr von Methoden. Beim Aufbau von Stack Frames, insbesondere beim Methodenaufruf, werden Statusinformationen der virtuellen Maschine VM eingefroren und in einem sog. Frame-Kontrollblock FCB abgelegt, damit nach Abbau dieses Stack Frames an derselben Stelle weitergearbeitet werden kann. Ist der virtuelle Maschine-Statusblock VMSB direkt auf (einen Teil der) dedizierten Register des virtuelle Maschine-Ausführungsmodus abgebildet, kann (bei geeigneter Anordnung der Register) der benötigte Teil des virtuelle Maschine-Statusblocks VMSB mit einer Store Multiple-Operation (STM), welche mehrere Register auf einmal in einem linearen Adressbereich ablegt, gesichert werden. Dies ist in Fig. 4 exemplarisch dargestellt, in welcher die in den Registern r11_fig, r12_fig, r08_fig und r10_fig durch die Store Multiple-Operation in den Stack gespeichert werden. Die Register r11_fig, r12_fig, r08_fig und r10_fig, die in Fig. 4 grau schattiert hinterlegt sind, stellen den virtuelle Maschine-Statusblock VMSB dar. In dem Stack sind diese im grau hinterlegten Frame-Kontrollblock FCB abgelegt, wobei in dem Stack weiterhin lokale Variablen LV und Operanden OP enthalten sind.

Analog erfolgt das Extrahieren der Informationen beim Abbau eines Stack Frames effizient durch eine Load Multiple-Operation.

Ein weiterer Vorteil der Erfindung besteht darin, daß die virtuelle Maschine, die sich in dem Ausführungsmodus virtuelle Maschine befindet und mit der eigentlichen Bytecode-Interpretation beschäftigt ist, alle relevanten Daten in den dedizierten Registern abspeichern kann. Ein zusätzliches Sichern (und Wiederherstellen) von dem Statusregister der virtuellen Maschine ist dann bei einem Umschalten zwischen verschiedenen Aufgaben (Task Switch) nicht mehr notwendig. Ein solches Sichern und Wiederherstellen muss nur dann erfolgen, wenn eine komplexe Operation durchgeführt wird, wie z.B. der Aufruf einer nativen Methode oder ein Unterprogrammaufruf der virtuellen Maschine.

## Patentansprüche

1. Tragbarer Datenträger mit einem Mikroprozessor, der in einer Mehrzahl von Ausführungsmoden (M1, M2, M3, M4, M5, M6) betreibbar ist, wobei jedem der Ausführungsmodi (M1, M2, M3, M4, M5, M6) eine bestimmte Zahl an Registern (R) zugeordnet ist, **dadurch gekennzeichnet, daß** einer der Ausführungsmoden (M1, M2, M3, M4, M5, M6) des Mikroprozessors ein virtuelle Maschine-Modus ist, in dem der Ausführungsmodus den Bytecode einer virtuellen Maschine interpretiert,
der Mikroprozessor dazu eingerichtet ist, einen bestehenden Ausführungsmodus durch den virtuelle Maschine-Modus zu ersetzen, wobei dem virtuelle Maschine-Modus die Register (R) zugeordnet sind, die dem ersetzten Ausführungsmodus (M1, M2, M3, M4, M5, M6) zugeordnet waren und wobei der Inhalt der Register (R) bei dem Ausführungsmodus-Wechsel erhalten bleibt.

2. Datenträger nach Anspruch 1, **dadurch gekennzeichnet, daß** dem einen Ausführungsmodus eine Anzahl an Registern (R) beigeordnet ist, in welche von der virtuellen Maschine (VM) genutzte Variable einspeicherbar sind, so daß Operationen des Mikroprozessors ausführbar sind, ohne daß die Variablen von einem Speicher in den Mikroprozessor, und umgekehrt, geladen werden müssen.

3. Datenträger nach Anspruch 1 oder 2, **dadurch gekennzeichnet, daß** in die dem einen Ausführungsmodus beigeordneten Register (R) Kontrollvariablen, welche von der virtuellen Maschine mehrfach oder regelmäßig benötigt werden, einspeicherbar sind.

4. Datenträger nach Anspruch 3, **dadurch gekennzeichnet, daß** ein Fast-Interrupt-Modus durch den einen Ausführungsmodus ersetzt ist.

5. Datenträger nach einem der vorherigen Ansprüche, **dadurch gekennzeichnet, daß** Statusinformationen in den Registern des einen Ausführungsmodus mit einem einzigen Blocktransferbefehl speicherbar sind.

6. Datenträger nach einem der vorherigen Ansprüche, **dadurch gekennzeichnet, daß** der Mikroprozessor in ARM-Architektur ausgebildet ist.

7. Verfahren zum Betreiben eines Mikroprozessors eines tragbaren Datenträgers, bei dem der Mikroprozessor selektiv in einem von mehreren Ausführungsmoden (M1, M2, M3, M4, M5, M6) betrieben wird, wobei jedem der Ausführungsmoden (M1, M2, M3, M4, M5, M6) eine bestimmte Zahl an Registern (R) zugeordnet wird, **dadurch gekennzeichnet, daß** einer der Ausführungsmoden des Mikroprozessors ein virtuelle Maschine-Modus ist, in dem der Ausführungsmodus den Bytecode einer virtuellen Maschine interpretiert, um eine virtuelle Maschine zu realisieren, und dem virtuelle Maschine-Modus die Registern (R) zugeordnet sind, die dem ersetzten Ausführungsmodus (M1, M2, M3, M4, M5, M6) zugeordnet waren und wobei der Inhalt der Register (R) bei dem Ausführungsmodus-Wechsel erhalten bleibt..

8. Verfahren nach Anspruch 7, **dadurch gekennzeichnet, daß** dem einen Ausführungsmodus eine Anzahl an Registern (R) beigeordnet wird, in welche von der virtuellen Maschine (VM) genutzte Variable eingespeichert werden können, so daß Operationen des Mikroprozessors ausführbar sind, ohne daß die Variablen von einem Speicher in den Mikroprozessor, und umgekehrt, geladen werden müssen.

9. Verfahren nach Anspruch 7 oder 8, **dadurch gekennzeichnet, daß** in die dem einen Ausführungsmodus beigeordneten Register (R) Kontrollvariablen, welche von der virtuellen Maschine mehrfach oder regelmäßig benötigt werden, gespeichert werden.

10. Verfahren nach einem der Ansprüche 7 bis 9, **dadurch gekennzeichnet, daß** ein bestehender Ausführungsmodus, insbesondere ein Fast-Interrupt-Modus, des Mikroprozessors durch den einen Ausführungsmodus ersetzt wird.

11. Verfahren nach einem der Ansprüche 7 bis 10, **dadurch gekennzeichnet, daß** Statusinformationen in den Registern des einen Ausführungsmodus mit einem einzigen Blocktransferbefehl (STM) gesichert werden.

## Claims

1. A portable data carrier with a microprocessor that is operable in a plurality of execution modes (M1, M2, M3, M4, M5, M6), wherein to each of the execution modes (M1, M2, M3, M4, M5, M6) a specified number of registers (R) is allocated, **characterized in that** one of the execution modes (M1, M2, M3, M4, M5, M6) of the microprocessor is a virtual-machine mode in which the execution mode interprets the byte code of a virtual machine,
the microprocessor is adapted to replace an existing execution mode by the virtual-machine mode, wherein those registers (R) are allocated to the virtual-machine mode which had been allocated to the replaced execution mode (M1, M2, M3, M4, M5, M6) and wherein the content of the registers (R) is maintained in the change of execution mode.

2. The data carrier according to claim 1, **characterized in that** with the one execution mode a number of registers (R) is associated in which variables used by the virtual machine (VM) are storable, so that operations of the microprocessor are executable without having to load the variables from a memory into the microprocessor and vice versa.

3. The data carrier according to claim 1 or 2, **characterized in that** into the registers (R) associated with the one execution mode control variables are storable which are required multiple times or regularly by the virtual machine.

4. The data carrier according to claim 3, **characterized in that** a fast-interrupt mode is replaced by the one execution mode.

5. The data carrier according to any of the preceding claims, **characterized in that** status information is storable in the registers of the one execution mode with one single block transfer command.

6. The data carrier according to any of the preceding claims, **characterized in that** the microprocessor is formed in the ARM architecture.

7. A method for operating a microprocessor of a portable data carrier wherein the microprocessor is operated selectively in one of several execution modes (M1, M2, M3, M4, M5, M6), wherein to each of the execution modes (M1, M2, M3, M4, M5, M6) a specified number of registers (R) is allocated, **characterized in that** one of the execution modes (M1, M2, M3, M4, M5, M6) of the microprocessor is a virtual-machine mode in which the execution mode interprets the byte code of a virtual machine, in order to realize a virtual machine and those registers (R) are allocated to the virtual-machine mode which had been allocated to the replaced execution mode (M1, M2, M3, M4, M5, M6) and wherein the content of the registers (R) is maintained in the change of execution mode.

8. The method according to claim 7, **characterized in that** with the one execution mode a number of registers (R) is associated in which variables used by the virtual machine (VM) are storable, so that operations of the microprocessor are executable without having to load the variables from a memory into the microprocessor and vice versa.

9. The method according to claim 7 or 8, **characterized in that** in the registers (R) associated with the one execution mode control variables are stored which are required multiple times or regularly by the virtual machine.

10. The method according to any of claims 7 to 9, **characterized in that** an existing execution mode, in particular a fast-interrupt mode of the microprocessor is replaced by the one execution mode.

11. The method according to any of claims 7 to 10, **characterized in that** status information is saved in the registers of the one execution mode with one single block transfer command (STM).

## Revendications

1. Support de données ayant un microprocesseur apte à fonctionner dans une pluralité de modes d'exécution (M1, M2, M3, M4, M5, M6), cependant que, à chacun des modes d'exécution (M1, M2, M3, M4, M5, M6), un nombre déterminé de registres (R) est affecté, **caractérisé en ce qu'**un des modes d'exécution (M1, M2, M3, M4, M5, M6) du microprocesseur est un mode machine virtuelle dans lequel le mode d'exécution interprète le code à octets d'une machine virtuelle,
le microprocesseur est conçu pour remplacer un mode d'exécution présent par le mode machine virtuelle, cependant que, au mode machine virtuelle, les registres (R) qui étaient affectés au mode d'exécution (M1, M2, M3, M4, M5, M6) remplacé sont affectés, et cependant que le contenu des registres (R) reste conservé lors du changement de mode d'exécution.

2. Support de données selon la revendication 1, **caractérisé en ce que**, au un mode d'exécution, un nombre de registres (R) dans lesquels des variables utilisées par la machine virtuelle (VM) peuvent être mémorisées est associé, de telle sorte que des opérations du microprocesseur peuvent être exécutées sans que les variables ne doivent être chargées d'une mémoire dans le microprocesseur ou inversement.

3. Support de données selon la revendication 1 ou 2, **caractérisé en ce que**, dans les registres (R) associés au un mode d'exécution, des variables de contrôle dont a besoin la machine virtuelle plusieurs fois ou régulièrement peuvent être mémorisées.

4. Support de données selon la revendication 3, **caractérisé en ce qu'**un mode d'interruption rapide est remplacé par un mode d'exécution.

5. Support de données selon une des revendications précédentes, **caractérisé en ce que** des informations de statut peuvent être mémorisées dans les registres du un mode d'exécution avec une seule instruction de bloc-transfert.

6. Support de données selon une des revendications précédentes, **caractérisé en ce que** le microprocesseur est configuré en architecture ARM.

7. Procédé de fonctionnement d'un microprocesseur d'un support de données portable dans lequel le microprocesseur fonctionne sélectivement dans un de plusieurs modes d'exécution (M1, M2, M3, M4, M5, M6), cependant que, à chacun des modes d'exécution (M1, M2, M3, M4, M5, M6), un nombre déterminé de registres (R) est affecté, **caractérisé en ce qu'**un des modes d'exécution du microprocesseur est un mode machine virtuelle dans lequel le mode d'exécution interprète le code à octets d'une machine virtuelle afin de réaliser une machine virtuelle, et que, au mode machine virtuelle, les registres (R) qui étaient affectés au mode d'exécution (M1, M2, M3, M4, M5, M6) remplacé sont affectés, et cependant que le contenu des registres (R) reste conservé lors du changement de mode d'exécution.

8. Procédé selon la revendication 7, **caractérisé en ce que**, au un mode d'exécution, un nombre de registres (R) dans lesquels des variables utilisées par la machine virtuelle (VM) peuvent être mémorisées est associé, de telle sorte que des opérations du microprocesseur peuvent être exécutées sans que les variables ne doivent être chargées d'une mémoire dans le microprocesseur ou inversement.

9. Procédé selon la revendication 7 ou 8, **caractérisé en ce que**, dans les registres (R) associés au un mode d'exécution, des variables de contrôle dont a besoin la machine virtuelle plusieurs fois ou régulièrement sont mémorisées.

10. Procédé selon une des revendications de 7 à 9, **caractérisé en ce qu'**un mode d'exécution présent, en particulier un mode d'interruption rapide, du microprocesseur, est remplacé par le un mode d'exécution.

11. Procédé selon une des revendications de 7 à 10, **caractérisé en ce que** des informations de statut sont mémorisées dans les registres du un mode d'exécution avec une seule instruction de bloc-transfert (STM).
